# EUROPEAN PATENT APPLICATION

(11) **EP 0 621 558 A2**
(43) Date of publication of application: **26.10.1994**
(21) Application number: 94105485.0
(22) Date of filing: 08.04.1994
(51) Int. Cl.: G06K 15/12, G02B 27/00, G02B 26/10

(54) **Flying spot laser printers using multi spatial mode lasers and laser array**

(30) Priority: 23.04.1993 US 51715
(71) Applicant: EASTMAN KODAK COMPANY, Rochester, New York 14650-2201 (US)
(72) Inventor: Sarraf, Sanwal P., c/o Eastman Kodak Co, Rochester, New York 14650-2201 (US)
(74) Representative: Wagner, Karl H., Dipl.-Ing.

(57) **Abstract**

Flying spot laser printers include one or more spatially partially coherent multimode lasers for generating a corresponding number of separate light beams, and an optical system including a movable mirror, holygon, polygon, or any other suitable device for scanning and focusing the light beams on a surface of a light sensitive printing media. The light beam from each multimode laser is spatially coherent in a first cross-sectional direction and spatially incoherent in a second orthogonal cross-sectional direction upon leaving the associated multimode laser. The optical system treats each of the spatially coherent and spatially incoherent directions independently and uses an F-e scanning lens to produce a separate spot of laser light with a desired size on the printing media for each laser as the spot is scanned across the printing media.

## Description

### Field of the Invention

The present invention relates to laser printers, and, more particularly, to flying spot scanning laser printers using at least one spatially partially coherent multimode laser.

### Background of the Invention

In a laser printer, a single light beam that is modulated by an image signal is used to form an image on a printing media. The printing media can comprise either a light photosensitive material for film printing or a receiver member via a dye donor member for thermal printing. To achieve high speed image printing, multi-beam laser printers are used to produce a plurality of light beams which are simultaneously scanned along rows or columns of the printing media to print the desired image.

U.S. Patent No. 4,424,442 (T. Kitamura), issued on January 3, 1984, discloses an exemplary multi-beam scanning laser printer comprising an array of single mode lasers, a collimating lens, a rotating polygonal mirror, an F-e scanning imaging lens, a photodetector circuit, and a photosensitive drum or material. The single mode lasers provide separate light beams at different heights along the axis of the array which are collimated and directed to a common area on the polygonal mirror by the collimating lens. The light beams are angularly reflected from the mirror and propagate through the F-e scanning lens to focus the light beams onto the photosensitive drum with a predetermined scanning pitch. The photodetector means is positioned outside the scanning area and adjacent to the drum to detect when each light beam spot (a) begins the scanning of the requisite scanning area, (b) is focused with respect to the scanning direction of the spot beam, and (c) defocused with respect to a direction orthogonal to the scanning direction.

U.S. Patent No. 5,018,805 (D. Kessler), issued on May 28, 1991, discloses a laser printer for use in color imaging. The printer comprises three single mode diode lasers, which each emit a light beam at a different wavelength. Each of the light beams passes along a separate channel including a plurality of optical plates, polarizers, and lenses to a pair of dichroic plates which combine the three beams into a single combined beam. The combined beam is scanned onto a receiving medium by the motion of a rotating polygon. An optical relay is used to (a) transfer the combined beam from a registration plane to the polygon, and (b) focus the combined beam in a cross-scan direction on the polygon. The polygon is optically conjugated to an image plane on the receiving medium for achieving cross-scan error correction.

A typical high speed flying spot laser printer comprises a gas or diode laser radiating a single spatial mode that is spatially coherent, a rotating polygonal mirror, a galvanometer or a hologonal diffractive element, and a flat field lens. In a flying spot scanning system it is desirable to have large propagation distances of optical radiation, optical elements having a small size, printing with a small spot size which is limited only by diffraction of the included optical elements, a maximum brightness of the spots, a large depth of focus of the optical elements, and a capability to deflect the scanning laser beams over large angular and spatial regions.

The general requirements of high resolution (small spot size) and fast speed (maximum irradiance) favor the use of spatially coherent (single mode) lasers. The power per unit area of a focused beam is called irradiance and is directly proportional to the product of the source (laser) power and the solid angle subtended at the focus by an exit pupil of the optical system. The solid angle, in turn, is proportional to the product of the size of the light source and the numerical aperture of the light source and is commonly known as the LaGrange invariant. For a given power of the light source, a highest brightness is achieved by keeping (maintaining) the LaGrange invariant between the light source and the image (spot) on the printing media. More particularly, a laser diode array can be used for printing in two ways. A first way is to image the laser array directly onto a print medium using imaging optics. The problem is that the optical throughput (or entendu) of such optics is large. A two-dimensional product of the laser diode array area and its solid angle is defined as the optical throughput or entendu, while a one-dimensional equivalent is the commonly-known Lagrange invariant. For a spatially incoherent light source, the Lagrange invariant is defined as the light source's "half-size" multiplied by the NA. For a spatially coherent light source, however, the Lagrange variant is independent of source size and is defined by ahr, where a is the wavelength of the laser diode. In the cross-array direction, the radiation is usually spatially coherent and the Lagrange invariant is ahr which is a small number. However, with high-power, multimode laser arrays, radiation in the array direction is spatially partially coherent and the Lagrange invariant is large. Since multimode laser arrays have a large Lagrange invariant and is spatially incoherent in the array direction and a small Lagrange invariant and is spatially coherent in the cross-array direction, it is difficult to use multimode laser arrays in flying-spot scanners. Generally, the optics associated therewith has to be highly anamorphic to deal with the large divergence in the cross-array direction which makes the optics usually rather complex.

For printing media such as silver halide surfaces that are to be exposed, single mode lasers provide sufficient power. However, with the newer media being used, more power is required such as that provided by spatially partially coherent multimode lasers. In some prior art laser thermal printers, instead of directly scanning laser beams, the laser beams are just focused, and scanning is performed by a movement of a drum supporting the thermal printing media on which an image is to be printed and/or the printhead mounting the lasers. With such prior art laser printers, a scanning mirror cannot be used since a very large lens or a very small focal length is required to provide a necessary matching of the well-known LaGrange invariant.

It is desirable to provide a laser printer having the advantages over prior art laser printers of increased productivity without increased hardware costs, reduced hardware costs due to the use of a flying spot architecture, and the use of one or more inexpensive (spatially partially coherent) multimode lasers while maintaining the LaGrange invariant.

### Summary of the Invention

The present invention is directed to laser printers, and, more particularly, to flying spot scanning laser printers using at least one spatial partially coherent multimode laser.

Viewed from one aspect, the present invention is directed to a laser printer for printing an image on a light sensitive printing media comprising a spatially partially coherent multimode laser, and optical means. The spatially partially coherent multimode laser generates a light beam is modulated to produce a selective predetermined density at each pixel of the image, and a cross-section which is spatially coherent in a first direction and spatially incoherent in a second orthogonal direction. The optical means is positioned relative to the multimode laser to receive the light beam from the multimode laser and to optically and selectively treat each of the spatially coherent and spatially incoherent directions of the light beam to (a) focus the light beam to a predetermined sized spot on the printing media, and (b) scan the predetermined sized spot along a predetermined path on a plane of the printing media to print the image.

Viewed from another aspect, the present invention is directed to a laser printer for printing an image on a light sensitive printing media comprising a plurality of spatially partially coherent multimode lasers, and optical means. The plurality of spatially partially coherent multimode lasers are disposed in an array. Each of the multimode lasers is adapted to generate a separate light beam that is modulated to produce a selective predetermined density at each pixel of the image, and a cross-section that is spatially coherent in a first direction and spatially incoherent in a second orthogonal direction. The light sensitive printing media is used to reproduce an image thereon with a selective predetermined density at each pixel of the image in accordance with the selective power of the individual light beams from the plurality of multimode lasers. The optical means is disposed to receive the light beams from the plurality of multimode lasers and to optically and selectively treat each of the spatially coherent and spatially incoherent directions of the light beam to (a) focus each light beam to a separate predetermined sized spot on the printing media, and (b) scan each predetermined sized spot along a separate predetermined path on a plane of the printing media which is substantially parallel to the path of each other spot to print the image.

The invention will be better understood from the following more detailed description taken with the accompanying drawings and claims.

### Brief Description of the Drawings

FIG. 1 is a view in perspective of a laser printer in accordance with a first embodiment of the present invention;
FIG. 2 is a view in perspective of a laser printer in accordance with a second embodiment of the present invention;
FIG. 3 is a view in perspective of a laser printer in accordance with a third embodiment of the present invention;
FIG. 4 is a view in perspective of a laser printer in accordance with a fourth embodiment of the present invention; and
FIG. 5 is a view in perspective of a laser printer in accordance with a fifth embodiment of the present invention;

The drawings are not necessarily to scale.

### Detailed Description

It is to be understood that corresponding designation numbers are used in the various figures for corresponding elements that have a same function. For purposes of explanation only, the laser printers in accordance with the present invention will be described using four spatially partially coherent multimode lasers for generating four simultaneous laser beams. However, the laser printers of the present invention can comprise one or more spatially partially coherent multimode lasers for generating a corresponding number of laser beams in order to print an image.

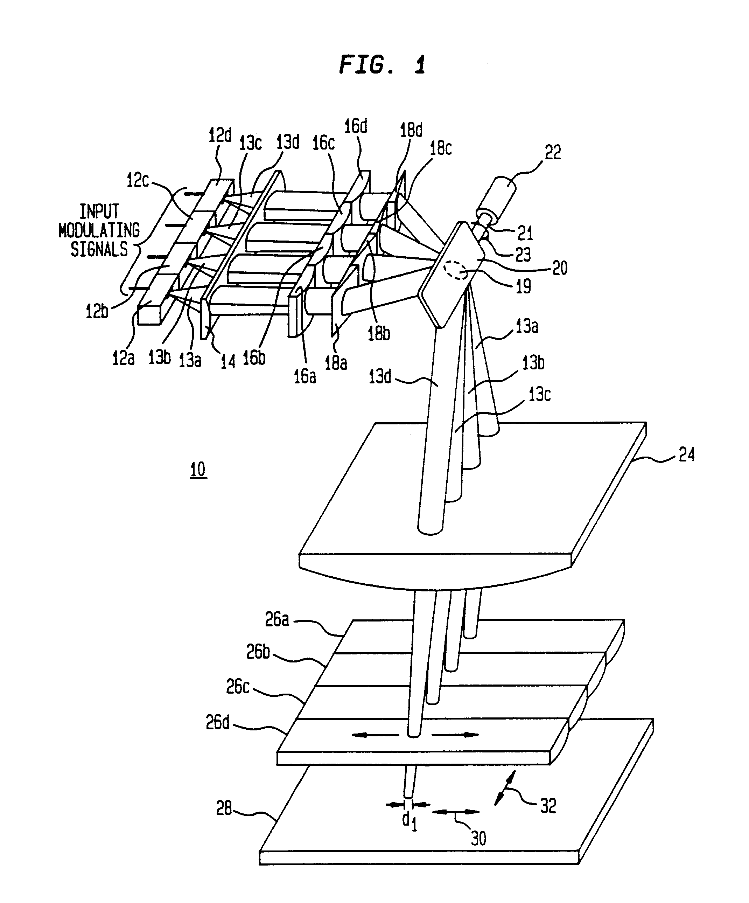

Referring now to FIG. 1, there is shown a perspective view of a flying-spot laser printer 10 in accordance with a first embodiment of the present invention. The laser printer 10 comprises a plurality of four spatially partially coherent multimode lasers 12a, 12b, 12c, and 12d which form a multimode laser array, an optical sequence of a collimating lens 14, an array of four cylindrical lenslets 16a, 16b, 16c, and 16d, an array of four prisms 18a, 18b, 18c, and 18d, a mirror 20 that is oscillated (shown by the double-headed arrow 23) by a galvanometer 22 via a shaft 21, a scanning lens 24, and an array of four cylindrical lenses 26a, 26b, 26c, and 26d. A light sensitive printing media 28 (e.g., a photosensitive film or a thermal printing media) on which an image is to be printed is shown below cylindrical lenses 26a, 26b, 26c, and 26d. The four spatially partially coherent multimode lasers 12a, 12b, 12c, and 12d are each modulated with a separate input modulating signal in order to generate the light beams 13a, 13b, 13c, and 13d, respectively, with a variably selective power that is dependent on the associate input modulating signal to each multimode laser 12. Each of the light beams 13a, 13b, 13c, and 13d is used to print pixels of a separate column or row of the desired image on the printing media 28. The variably selective power of each of the light beams 13a, 13b, 13c, or 13d is used to produce a predetermined color density at each of the associated pixels of the desired image being reproduced on the printing media 28.

The multimode lasers 12a, 12b, 12c, and 12d produce modulated diverging output light beams 13a, 13b, 13c, and 13d, respectively. Generally, these light beams are elliptical in cross-section because of the asymmetry of the emission region of the multimode laser and are spatially partially coherent, but the light beams could be circular. More particularly, when viewing each diverging light beam 13 in cross-section as it leaves its associated laser 12, the light is spatially incoherent in a first direction and spatially coherent in a second direction orthogonal to the first direction. For purposes of description hereinafter, it is assumed that the light in the cross-section of each light beam is spatially incoherent in a first direction along a line that is parallel to the axis of the laser array, and is coherent in a second direction along a line that is orthogonal to the axis of the laser array. The diverging spatially partially coherent light beams 13a-13d propagate away from the lasers 13a-13d, respectively, in a direction substantially parallel to each other and are intercepted by the collimating lens 14.

The collimating lens 14 has a cylindrical surface which provides power in a first direction along the curve of the cylindrical surface to collimate the diverging light beams 13a, 13b, 13c, and 13d in that direction. In other words, the collimating lens 14 is arranged to only have power in one direction for collimating each of the laser beam 13a-13d in a direction that corresponds to the direction of the spatially coherent light of each beam. The array of four cylindrical lenslets 16a, 16b, 16c, and 16d function to receive the light beams 13a, 13b, 13c, and 13d, respectively, from the collimating lens 14. The lenslets 16a-16d serve (have a power) to collimate the light beams 13a-13d, respectively, in a second direction which is orthogonal to the first curvature direction of the collimating lens 14. In other words, the lenslets 16a, 16b, 16c, and 16d are each arranged to only have a power (lens curvature) in one direction for collimating a corresponding one of the laser beams 13a-13d in a direction that corresponds to the direction of the spatially incoherent light of that beam.

The light beams 13a, 13b, 13c, and 13d (which have been collimated in both orthogonal directions by the collimating lens 14 and the lenslets 16a-16d) are redirected by the prisms 18a, 18b, 18c, and 18d, respectively, so that the light beams 13a-13d are angularly combined at a predetermined area 19 (shown by the dashed-line ellipse) on the mirror 20. The mirror 20 is mounted on the shaft 21 of a galvanometer 22 and oscillates to provide deflection (scanning) of the light beams 13a, 13b, 13c, and 13d along a direction shown by double-headed arrow 30 on the printing media 28. It is to be understood that the function of the lens 14, the lenses 16a-16d, and the prisms 18a-18d can be combined by means of a set of binary and conventional optics.

The collimated light beams 13a-13d emerging from mirror 20 are angularly separated and impinge on the scanning lens 24 which is, for example, the well-known F-e type lens. More particularly, the scanning lens 24 is a cylindrical type lens with power in a direction of the spatially coherent radiation, and forms a spot of diameter d1 in the line direction (arrow 30) on the plane of the printing media 28 for each of the light beams 13a-13d. The F-e scanning lens is a well-known multi-element lens which functions to provide distortions as a light beam is scanned in a predetermined direction which converts (a) all focal points from a curved line onto a straight line on the plane of the printing media 28, and (b) converts an equal angle 0 for equal time to an equal height along the straight focal line for equal time.

More particularly, as a light beam is directed along the longitudinal axis of a normal cylindrical lens and propagates through that lens, the light beam is focused to a focal point on the longitudinal axis on a focal surface which is tangent to a flat plane of a media surface such as printing media 28. As the light beam is scanned at an increased angle 0 away from the longitudinal axis of the normal lens, the focal points follow a curved line that moves increasingly away from the flat media surface. To overcome this effect, the F-e scanning lens 24 provides a first distortion in a direction of scan to redirect each focal point from the curved line onto a straight line on the flat media surface as the angle 0 increases. Secondly, when the focal points are projected from the curved focal plane of a normal lens onto the flat plane of the media surface for equal increasing angles of 0, the distances between spots projected on the flat plane increase. To overcome this effect, the F-e scanning lens 24 introduces a second distortion that produces equal distances between points on the flat plane of the media surface for each degree of change of the angle 0 away from the longitudinal axis of the lens.

The cylindrical lenses 26a, 26b, 26c, and 26d are arranged to have power (along the curve of the cylindrical surface) to shape the radiation in the spatially incoherent direction in the light beams 13a, 13b, 13c, and 13d, respectively, and form a line of separate spots in the direction of an arrow 32 having a predetermined shape and size on the plane of the printing media 28. The cylindrical lenses 26a, 26b, 26c, and 26d each have an f/number which permits the cylindrical lenses 26a-26d to be kept close to the plane of the printing media 28. Still further, the lasers beams 13a, 13b, 13c, and 13d are scanned along the cylindrical lenses 26a, 26b, 26c, and 26d, respectively, in the direction (shown by arrow 30) of no power of the lenses 26a-26d by the motion of mirror 20. Such conditions make the size and the focal length of the cylindrical lenses 26a, 26b, 26c, and 26d manageable. It is to be understood that where the laser printer 10 only uses one multimode laser 12, then only one cylindrical lenslet 16, no prism 18, and one cylindrical lens 26 is required to scan the single spot produced from the light beam 13 generated by the multimode laser 12 over the surface of the printing media 28.

An exemplary laser printer 10 comprises a spatially partially coherent laser source 12 having a length of 200 /1.m with an objective, for example, to form an 80 /1.m diameter (d1) flying spot on the printing media 28. This can be achieved using a collimating lens 14 having a focal length of 2.90 mm and a size of 3 mm (height along the curve of the lens), a lenslet 16 having a focal length of 12.5 mm and a size of 4 mm (height along the curve of the lenslet), a mirror 20 having a size of 5 mm by 5 mm, an F-e scanning lens 24 having a focal length of 10 cm, and cylindrical lenses 26a, 26b, 26c, and 26d having a focal length of 5 mm and an f/number of 1.25. If the optics of the printer 10 is telecentric, then the length of the scanning lens 24 and combination of the lenslets 26a, 26b, 26c, and 26d are the same as the length of the line format (along arrow 30). It is to be understood that the optics of the laser printer 10 provide a line (e.g., a column) scan along the arrow 30 on the printing media 28, whereas the page scan along the arrow 32 on the printing media 28 is provided independently by, for example, a rotating drum or a linear bed motion of a flat on which the printing media 28 is mounted. It is to be further understood that a variety of spot sizes and spatial separation between spots (pixels) on the printing media 28 is achievable by adjusting the focal lengths of the lenses 14, 16, 24, and 26, and the angular separation of the light beams 13a, 13b, 13c, and 13d at the mirror 20. The optical elements of the laser printer 10 effectively decouple each of the spatially coherent and spatially incoherent light within each light beam 13 for separate treatment as the light beam 13 is scanned and focused onto the printing media 28.

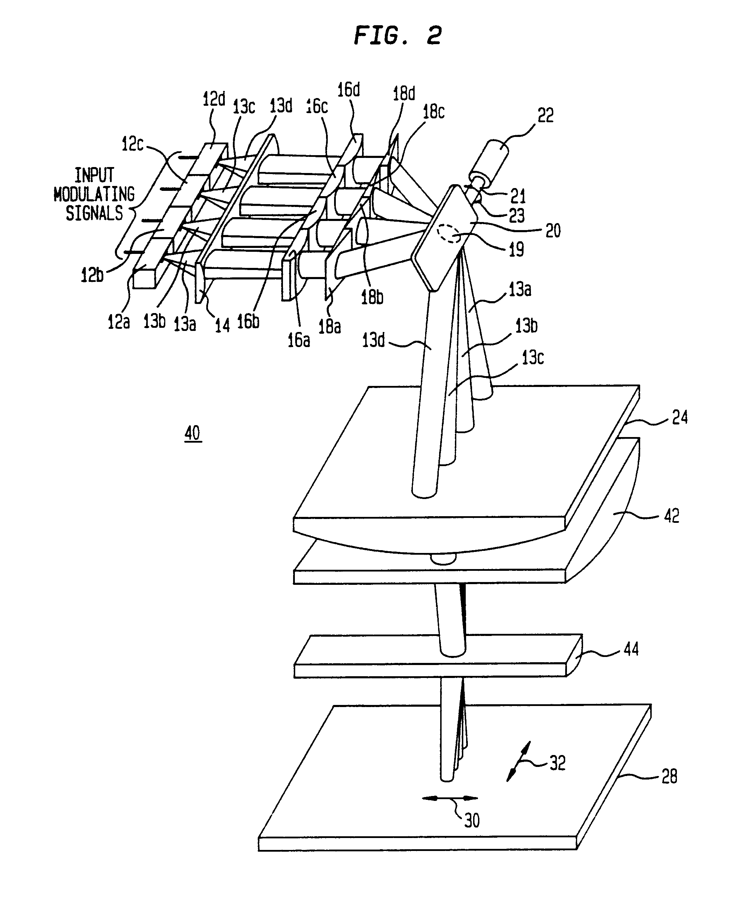

Referring now to FIG. 2, there is shown a perspective view of a flying-spot laser printer 40 in accordance with a second embodiment of the present invention. Laser printer 40 is a variation of laser printer 10 of FIG. 1 and comprises a plurality of four spatially partially coherent multimode lasers 12a, 12b, 12c, and 12d forming a laser array, an optical sequence of a collimating lens 14, an array of four cylindrical lenslets 16a, 16b, 16c, and 16d, an array of four prisms 18a, 18b, 18c, and 18d, a mirror 20 that is oscillated (shown by the double-headed arrow 23) via a shaft 21 from a galvanometer 22, an F-e scanning lens 24, a first cylindrical lens 42, and a second cylindrical lens 44. A light sensitive printing media 28 on which an image is to be printed is located below lens 44. The four multimode lasers 12a-12d, the collimating lens 14, the four cylindrical lenslets 16a-16d, the four prisms 18a-18d, the mirror 20 and the scanning lens 24 of laser printer 40 function as described for the corresponding elements in laser printer 10 of FIG. 1.

The line of four light beams 13a-13d emerging from the F-e scanning lens 24 are intercepted by the first cylindrical lens 42. The first cylindrical lens 42 has power in a predetermined direction for converging the light beams 13a-13d emerging from the scanning lens 24 onto a common area on the second cylindrical lens 44. The second cylindrical lens 44 has power in the same direction as the first cylindrical lens 42 and corresponds to one of the four cylindrical lenses 26a, 26b, 26c, and 26d in laser printer 10 of FIG. 1. The spot-to-spot spacing of the light beams 13a-13d on the surface of the printing media 28 is adjustable by, for example, varying parameters of the first cylindrical lens 42 to produce a desired angular separation of the light beams 13a-13d incident on the second cylindrical lens 44. It is to be understood that a prism or an array of prisms (not shown) can also be used to achieve this function.

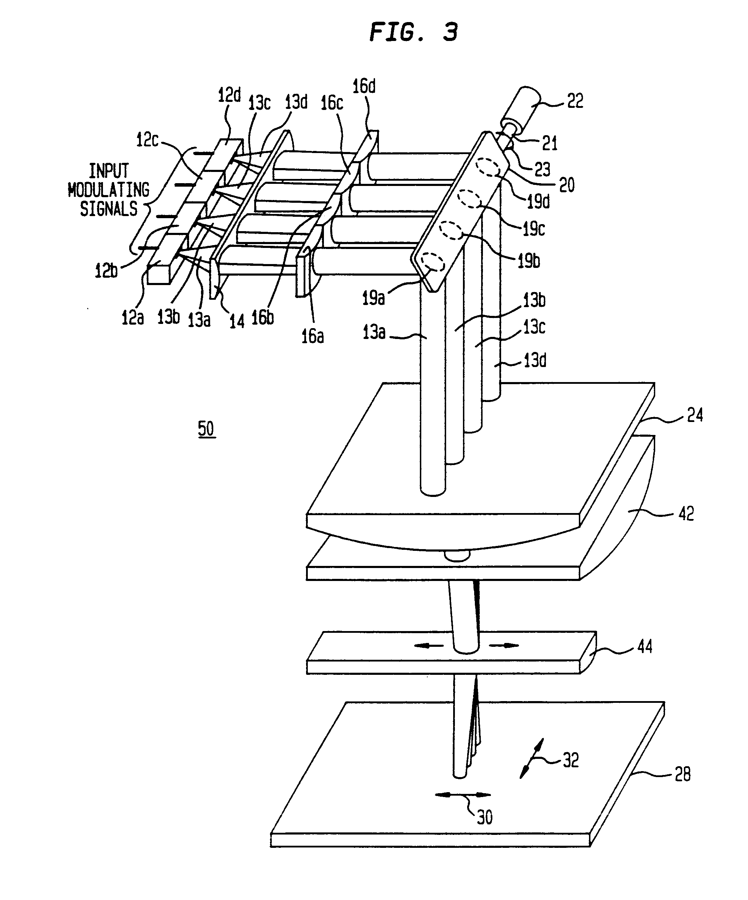

Referring now to FIG. 3, there is shown a perspective view of a flying spot laser printer 50 in accordance with a third embodiment of the present invention. Laser printer 50 is a variation of the laser printer 40 of FIG. 2, and comprises a plurality of four spatially partially coherent multimode lasers 12a, 12b, 12c, and 12d forming a laser array, an optical sequence of a collimating lens 14, an array of four cylindrical lenslets 16a, 16b, 16c, and 16d, a mirror 20 that is oscillated (shown by the double-headed arrow 23) via a shaft 21 of a galvanometer 22, an F-e scanning lens 24, a first cylindrical lens 42, and a second cylindrical lens 44, and a light sensitive printing media 28 on which an image is to be printed. The four multimode lasers 12a-12d, the collimating lens 14, the four cylindrical lenslets 16a-16d, and the scanning lens 24, the first cylindrical lens 42, and the second cylindrical lens 44 function as described for the corresponding elements in laser printer 40 of FIG. 2. The difference between the laser printer 40 and the laser printer 50 is that the collimated light beams 13a-13d emerging from the four lenslets 16a-16d, respectively, are not changed in direction using the prisms 18a-18d of laser printer 40. Instead, the four collimated light beams 13a-13d remain substantially parallel to each other and impinge the mirror 20 at spaced-apart areas 19a-19d (shown as dashed lined areas), respectively. The mirror 20 reflects the light beams 13a-13d onto the F-e scanning lens 24, which in conjunction with the first cylindrical lens 42 and the second cylindrical lens 44 form the desired spot-to-spot spacing of the light beams 13a-13d on the surface of the printing media 28. It is to be understood that the spot-to-spot spacing of the light beams 13a-13d on the surface of the printing media 28 is adjusted by, for example, varying parameters of the first cylindrical lens 42 to produce a desired angular separation of the light beams 13a-13d incident on the second cylindrical lens 44.

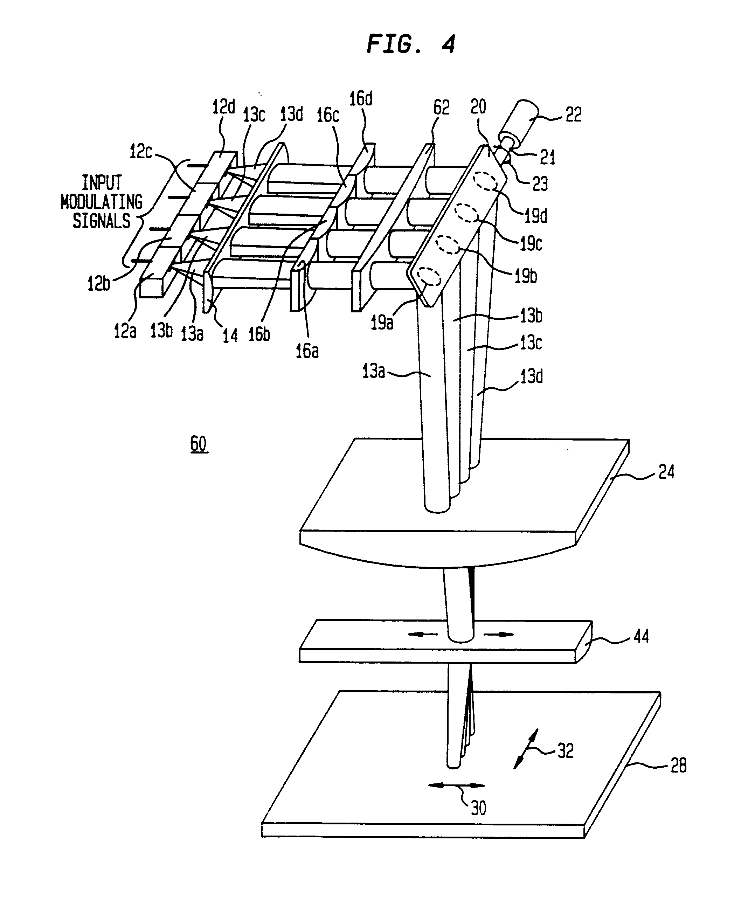

Referring now to FIG. 4, there is shown a perspective view of a flying-spot laser printer 60 in accordance with a fourth embodiment of the present invention. Laser printer 60 is a variation of laser printer 50 of FIG. 3, and comprises a plurality of four spatially partially coherent multimode lasers 12a, 12b, 12c, and 12d forming a laser array, an optical sequence of a collimating lens 14, an array of four cylindrical lenslets 16a, 16b, 16c, and 16d, a first cylindrical lens 62, a mirror 20 that is oscillated (shown by the double-headed arrow 23) via a shaft 21 of a galvanometer 22, an F-e scanning lens 24, and a second cylindrical lens 44. A light sensitive printing media 28 on which an image is to be printed is shown below the second cylindrical lens 44. The four multimode lasers 12a-12d, the collimating lens 14, the four cylindrical lenslets 16a-16d, the mirror 20, the scanning lens 24, and the second cylindrical lens 44 function as described for the corresponding elements in laser printer 50 of FIG. 3. The difference between the laser printer 50 and the laser printer 60 is that the collimated light beams 13a-13d emerging from the four lenslets 16a-16d, respectively, pass through the first cylindrical lens 62. The first cylindrical lens 62 has a power that converges the substantially parallel light beams 13a-13d from the lenslets 16a-16d onto a common area on the second cylindrical lens 44 after being reflected by the mirror 20 and passing through just the F-e scanning lens 24. The combination of the first cylindrical lens 62, the scanning lens 24 and the second cylindrical lens 44 form the desired spot-to-spot spacing of the light beams 13a-13d on the surface of the printing media 28. It is to be understood that laser printer 60 may require a larger mirror 20 than used for laser printers 10 or 40, and that the first cylindrical lens 62 has a large focal length and a high f/number. Still further, it is to be understood that the spot-to-spot spacing of the light beams 13a-13d on the surface of the printing media 28 can be adjusted by varying the angular separation of the light beams 13a-13d incident on the second cylindrical lens 44.

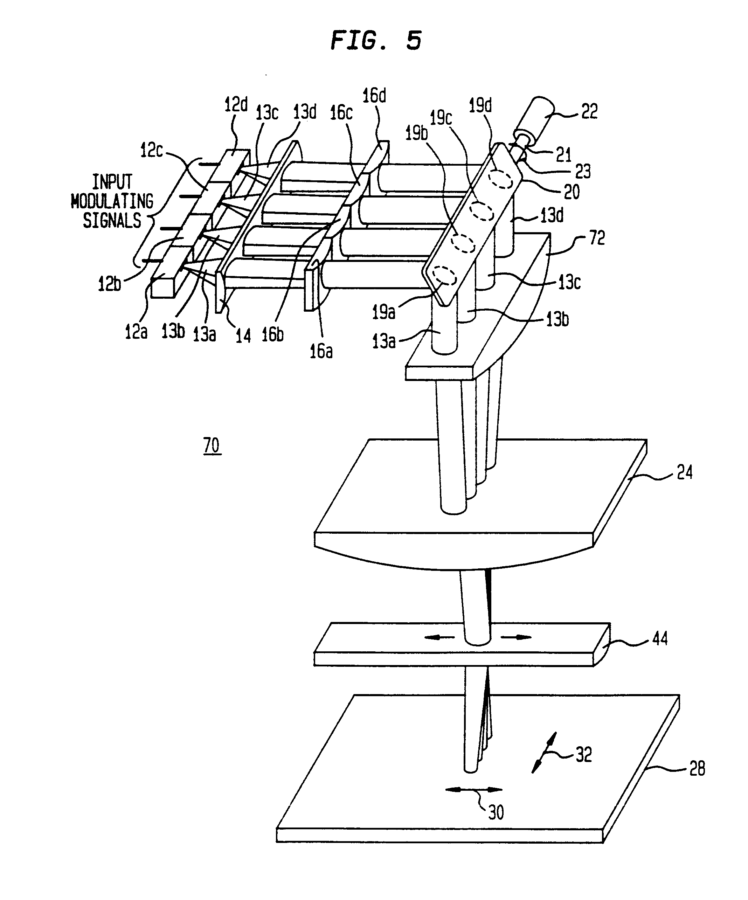

Referring now to FIG. 5, there is shown a perspective view of a flying-spot laser printer 70 in accordance with a fifth embodiment of the present invention. The laser printer 70 is a variation of laser printer 60 of FIG. 4, and comprises a plurality of four spatially partially coherent multimode lasers 12a, 12b, 12c, and 12d forming a laser array, an optical sequence of a collimating lens 14, an array of four cylindrical lenslets 16a, 16b, 16c, and 16d, a mirror 20 that is oscillated (shown by the double-headed arrow 23) via a shaft 21 of a galvanometer 22, a first cylindrical lens 72, an F-e scanning lens 24, and a second cylindrical lens 44. A light sensitive printing media 28 on which an image is to be printed is shown below the second cylindrical lens 44. The four multimode lasers 12a-12d, the collimating lens 14, the four cylindrical lenslets 16a-16d, the mirror 20, the scanning lens 24, and the second cylindrical lens 44 function as described for the corresponding elements in laser printer 50 of FIG. 4.

The difference between the laser printer 60 and the laser printer 70 is that in the laser printer 70 the collimated light beams 13a-13d emerging from the four lenslets 16a-16d, respectively, are reflected by the mirror before passing through the first cylindrical lens 72. The first cylindrical lens 72 converges the substantially parallel light beams 13a-13d reflected from the mirror 20 onto the second cylindrical lens 44 after passing through the F-e scanning lens 24. The combination of the first cylindrical lens 72, the scanning lens 24, and the second cylindrical lens 44 form the desired spot-to-spot spacing of the light beams 13a-13d on the surface of the printing media 28. It is to be understood that the spot-to-spot spacing of the light beams 13a-13d on the surface of the printing media 28 can be adjusted by varying the angular separation of the light beams 13a-13d incident on the second cylindrical lens 44 by any suitable means. Still further, it is to be understood that the laser printer 70 may require a larger mirror 20 than used for laser printers 10 or 40, a larger size first cylindrical lens 72 than used for the first cylindrical lens 62 of the laser printer 60, and that for the same printing media 28 distance, the focal length of the first cylindrical lens 72 will be smaller than the focal length of the first cylindrical lens 62 of the laser printer 60.

It is to be appreciated and understood that the specific embodiments of the invention described hereinabove are merely illustrative of the general principles of the invention. Various modifications may be made by those skilled in the art which are consistent with the principles set forth. For example, the oscillating mirror 20 in each of the figures can be replaced by a rotating mirror, a polygon system, a hologon system, or any other suitable arrangement. Still further, the lasers 12a-12d of the laser array in each of the figures can produce light beams 13a-13d, respectively, having the same or different wavelengths which are then processed as described hereinbefore by the various optical arrangements to print a desired image on the printing media 28.

It should be noted that the objects and advantages of the invention may be attained by means of any compatible combination(s) particularly pointed out in the items of the following summary of the invention and the appended claims.

### The Invention may be summarized as follows:

1. A laser printer for printing an image on a light sensitive printing media comprising:
   a spatially partially coherent multimode laser for generating a light beam that is modulated to produce a selective predetermined density at each pixel of the image, and a cross-section which is spatially coherent in a first direction and spatially incoherent in a second orthogonal direction; and
   optical means being positioned relative to the multimode laser so as to receive the light beam from the multimode laser and to optically and selectively treat each of the spatially coherent and spatially incoherent directions of the light beam to (a) focus the light beam to a predetermined sized spot on the printing media, and (b) scan the predetermined sized spot along a predetermined path on a plane of the printing media for printing the image.
2. The laser printer wherein the optical means comprises:
   a first lens having a power to collimate a first one of the spatially coherent or spatially incoherent directions of the light beam;
   a second lens having a power to collimate a second one of the spatially coherent or spatially incoherent directions of the light beam;
   means for scanning the collimated light beam from the first and second lenses along the predetermined path on the plane of the printing media; and
   an F-q) scanning lens for receiving the light beam from the scanning means and focus the light beam to a predetermined sized spot on a plane of the printing media.
3. The laser printer wherein the optical means further comprises a third lens for receiving the light beam from the F-q) scanning lens and having a power in a direction normal to the predetermined scan path to shape the radiation in the spatially incoherent direction in the light beam to form the light beam spot to the predetermined size on the plane of printing media.
4. The laser printer wherein the scanning means is selected from a group consisting of a movable mirror, a movable hologon system, or a movable polygon system.
5. The laser printer wherein the laser printer further comprises:
   a plurality of spatially partially coherent multimode lasers disposed in an array, each multimode laser generating a separate light beam that has selective power dependent on a separate input modulating signal and a cross-section that is spatially coherent in a first direction and spatially incoherent in a second orthogonal direction; and
   the optical means is disposed to receive the light beams from the plurality of multimode lasers and optically selectively treat each of the spatially coherent and spatially incoherent directions of each light beam to (a) focus each light beam to a predetermined sized spot on the printing media, and (b) scan the predetermined sized spot along a separate predetermined path on the plane of the printing media.
6. The laser printer wherein the optical means comprises:
   a first lens having a power to collimate a first one of the spatially coherent or spatially incoherent directions of the light beams from the plurality of multimode lasers;
   a plurality of second lenses, each second lens having a power to collimate a second one of the spatially coherent or spatially incoherent directions in a separate light beam from the plurality of multimode lasers;
   means for scanning the collimated light beams from the first and second lenses along the predetermined path on the plane of the printing media; and
   an F-q) scanning lens for receiving the light beams from the scanning means and focusing each of the light beams to a separate predetermined sized spot on a plane of the printing media.
7. The laser printer wherein the optical means further comprises at least one third lens for receiving the light beams from the F-q) scanning lens and having a power in a direction normal to the predetermined scan path to shape the radiation in the spatially incoherent direction in each of the light beams to form each of the light beam spots to the predetermined size on the plane of printing media.
8. The laser printer wherein the optical means further comprises optical redirecting means for converging the light beams at a predetermined area along the path of the light beams between the plurality of multimode lasers and the printing media and providing a predetermined angular separation between the light beams as the light beams leave the predetermined area.
9. The laser printer wherein the optical redirecting means is selected from a group consisting of a plurality of prisms where each prism is positioned to redirect the light beam from a separate multimode laser onto the predetermined area, or a lens having a power in a predetermined direction for converging the light beams onto the predetermined area.
10. A laser printer for printing an image on a light sensitive printing media comprising:
   a plurality of spatially partially coherent multimode lasers disposed in an array, each multimode laser being adapted to generate a separate light beam that is modulated to produce a selective predetermined density at each pixel of the image, and a cross-section that is spatially coherent in a first direction and spatially incoherent in a second orthogonal direction; and
   optical means being positioned relative to the plurality of multimode lasers so as to receive the light beams from the plurality of multimode lasers and to optically and selectively treat each of the spatially coherent and spatially incoherent directions of the light beams to (a) focus each light beam to a separate predetermined sized spot on the printing media, and (b) scan each predetermined sized spot along a separate predetermined path on a plane of the printing media which is substantially parallel to the path of each other spot for printing the image.
11. The laser printer wherein the optical means comprises:
   a first lens having a power to collimate a first one of the spatially coherent or spatially incoherent directions of the light beams from the plurality of multimode lasers;
   a plurality of second lenses, each second lens having a power to collimate a second one of the spatially coherent or spatially incoherent directions in a separate light beam from the plurality of multimode lasers;
   means for scanning the collimated light beams from the first and second lenses along the predetermined path on the plane of the printing media; and
   an F-q) scanning lens for receiving the light beams from the scanning means and focusing each of the light beams to a separate predetermined sized spot on a plane of the printing media.
12. The laser printer wherein the scanning means is selected from a group consisting of a movable mirror, a movable hologon system, or a movable polygon system.
13. The laser printer wherein the optical means further comprises at least one third lens for receiving the light beams from the F-q) scanning lens and having a power in a direction normal to the predetermined scan path to shape the radiation in the spatially incoherent direction in each of the light beams to form each of the light beam spots to the predetermined size on the plane of printing media.
14. The laser printer wherein the optical means further comprises a fourth lens having a power in a predetermined direction for converging the light beams onto a predetermined area on the third lens.
15. The laser printer wherein the optical means further comprises optical redirecting means for converging the light beams at a predetermined area along the path of the light beams between the plurality of multimode lasers and the printing media and providing a predetermined angular separation between the light beams as the light beams leave the predetermined area.
16. The laser printer wherein the optical redirecting means is selected from a group consisting of a plurality of prisms where each prism is positioned to redirect the light beam from a separate multimode laser onto the predetermined area, or a lens having a power in a predetermined direction for converging the light beams onto the predetermined area.
17. The laser printer wherein the optical redirecting means is a plurality of prisms disposed between the second lenses and the scanning means for redirecting the light beams from a separate multimode lasers onto the predetermined area disposed on the scanning means to provide the predetermined angular separation between the light beams as the light beams leave the predetermined area on the scanning means.

## Claims

1. A laser printer for printing an image on a light sensitive printing media comprising:
a spatially partially coherent multimode laser for generating a light beam that is modulated to produce a selective predetermined density at each pixel of the image, and a cross-section which is spatially coherent in a first direction and spatially incoherent in a second orthogonal direction; and
optical means being positioned relative to the multimode laser so as to receive the light beam from the multimode laser and to optically and selectively treat each of the spatially coherent and spatially incoherent directions of the light beam to (a) focus the light beam to a predetermined sized spot on the printing media, and (b) scan the predetermined sized spot along a predetermined path on a plane of the printing media for printing the image.

2. The laser printer of claim 1 wherein the optical means comprises:
a first lens having a power to collimate a first one of the spatially coherent or spatially incoherent directions of the light beam;
a second lens having a power to collimate a second one of the spatially coherent or spatially incoherent directions of the light beam;
means for scanning the collimated light beam from the first and second lenses along the predetermined path on the plane of the printing media; and
an F-q) scanning lens for receiving the light beam from the scanning means and focus the light beam to a predetermined sized spot on a plane of the printing media.

3. The laser printer of claim 2 wherein the optical means further comprises a third lens for receiving the light beam from the F-q) scanning lens and having a power in a direction normal to the predetermined scan path to shape the radiation in the spatially incoherent direction in the light beam to form the light beam spot to the predetermined size on the plane of printing media.

4. The laser printer of claim 1 wherein the laser printer further comprises:
a plurality of spatially partially coherent multimode lasers disposed in an array, each multimode laser generating a separate light beam that has selective power dependent on a separate input modulating signal and a cross-section that is spatially coherent in a first direction and spatially incoherent in a second orthogonal direction; and
the optical means is disposed to receive the light beams from the plurality of multimode lasers and optically selectively treat each of the spatially coherent and spatially incoherent directions of each light beam to (a) focus each light beam to a predetermined sized spot on the printing media, and (b) scan the predetermined sized spot along a separate predetermined path on the plane of the printing media.

5. A laser printer for printing an image on a light sensitive printing media comprising:
a plurality of spatially partially coherent multimode lasers disposed in an array, each multimode laser being adapted to generate a separate light beam that is modulated to produce a selective predetermined density at each pixel of the image, and a cross-section that is spatially coherent in a first direction and spatially incoherent in a second orthogonal direction; and
optical means being positioned relative to the plurality of multimode lasers so as to receive the light beams from the plurality of multimode lasers and to optically and selectively treat each of the spatially coherent and spatially incoherent directions of the light beams to (a) focus each light beam to a separate predetermined sized spot on the printing media, and (b) scan each predetermined sized spot along a separate predetermined path on a plane of the printing media which is substantially parallel to the path of each other spot for printing the image.

6. The laser printer of any of the preceding claims wherein the optical means comprises:
a first lens having a power to collimate a first one of the spatially coherent or spatially incoherent directions of the light beams from the plurality of multimode lasers;
a plurality of second lenses, each second lens having a power to collimate a second one of the spatially coherent or spatially incoherent directions in a separate light beam from the plurality of multimode lasers;
means for scanning the collimated light beams from the first and second lenses along the predetermined path on the plane of the printing media; and
an F-q) scanning lens for receiving the light beams from the scanning means and focusing each of the light beams to a separate predetermined sized spot on a plane of the printing media.

7. The laser printer of any of the preceding claims wherein the scanning means is selected from a group consisting of a movable mirror, a movable hologon system, or a movable polygon system.

8. The laser printer of any of the preceding claims wherein the optical means further comprises at least one third lens for receiving the light beams from the F-q) scanning lens and having a power in a direction normal to the predetermined scan path to shape the radiation in the spatially incoherent direction in each of the light beams to form each of the light beam spots to the predetermined size on the plane of printing media.

9. The laser printer of any of the preceding claims wherein the optical means further comprises a fourth lens having a power in a predetermined direction for converging the light beams onto a predetermined area on the third lens.

10. The laser printer of any of the preceding claims wherein the optical means further comprises optical redirecting means for converging the light beams at a predetermined area along the path of the light beams between the plurality of multimode lasers and the printing media and providing a predetermined angular separation between the light beams as the light beams leave the predetermined area.

11. The laser printer of any of the preceding claim wherein the optical redirecting means is selected from a group consisting of a plurality of prisms where each prism is positioned to redirect the light beam from a separate multimode laser onto the predetermined area, or a lens having a power in a predetermined direction for converging the light beams onto the predetermined area.

12. The laser printer of claim 10 wherein the optical redirecting means is a plurality of prisms disposed between the second lenses and the scanning means for redirecting the light beams from a separate multimode lasers onto the predetermined area disposed on the scanning means to provide the predetermined angular separation between the light beams as the light beams leave the predetermined area on the scanning means.

13. A laser printer for printing an image on a light sensitive printing media comprising:
a laser for generating a light beam that is modulated to produce a selective predetermined density at each pixel of the image, and a cross-section which is spatially coherent in a first direction and spatially incoherent in a second orthogonal direction; and
optical means being positioned relative to the laser so as to receive the light beam from the laser and to optically and selectively treat each of the spatially coherent and spatially incoherent directions of the light beam.
